# EUROPEAN PATENT APPLICATION

(11) **EP 4 746 111 A1**
(43) Date of publication of application: **20.05.2026**
(21) Application number: 25794946.1
(22) Date of filing: 27.03.2025
(51) Int. Cl.: H01M 10/42, H01M 50/30

(54) **BATTERY MODULE FOR DELAYING THERMAL PROPAGATION**

(30) Priority: 22.04.2024 KR 20240053210
(71) Applicant: LG Energy Solution, Ltd., Seoul 07335 (KR)
(72) Inventor: MIN, Jinki, Daejeon 34122 (KR); RHIM, Soeun, Daejeon 34122 (KR); KIM, Haeun, Daejeon 34122 (KR); PARK, Jongwook, Daejeon 34122 (KR); JEON, Sangyoon, Daejeon 34122 (KR); PANG, Yooseok, Daejeon 34122 (KR)
(74) Representative: BCKIP Part mbB
(86) International application number: PCT/KR2025/003942
(87) International publication number: WO 2025/225901

(57) **Abstract**

A battery module may include a battery cell stack in which a plurality of battery cells are stacked, a module case including a top plate disposed on an upper side of the battery cell stack and accommodating the battery cell stack, and an aerogel layer disposed between the top plate and the battery cell stack. The battery module delays thermal propagation and prevents back flame spreading from the inside of the battery module to cells.

## Description

### [TECHNICAL FIELD]

The present disclosure relates to a battery module, and more specifically, to a battery module for delaying thermal propagation.

### [BACKGROUND ART]

Unlike a primary battery that cannot be recharged, a secondary battery can be charged and discharged and is applied not only to portable devices but also to electric vehicles (EVs) and hybrid electric vehicles (HEVs) driven by an electric drive source.

The types of secondary batteries that are currently widely used include lithium ion batteries, lithium polymer batteries, nickel cadmium batteries, nickel hydrogen batteries, nickel zinc batteries, etc. The operating voltage of a unit secondary battery cell, i.e., a unit battery cell, is approximately 2.5 volts (V) to 4.6 V. Therefore, when an output voltage higher than this voltage is required, a battery pack is configured by connecting a plurality of battery cells in series. In addition, a battery pack may be configured by connecting a plurality of battery cells in parallel depending on the charge/discharge capacity required for the battery pack. Accordingly, the number of battery cells included in the battery pack can be set variously depending on the required output voltage or charge/discharge capacity.

In a case where a battery pack is configured by connecting a plurality of battery cells in series/in parallel, a battery module composed of at least one battery cell, or a plurality of battery cells, is configured first, and then a battery pack is configured using at least one such battery module and adding other components, in general. Here, a battery module means a component in which a plurality of battery cells is connected in series or in parallel, and a battery pack means a component in which a plurality of battery modules is connected in series or in parallel to increase capacity and output.

A battery module constituting such a secondary battery generates heat according to charging or discharging, and if overcharging or the like occurs, swelling of the battery module may cause an explosion or fire, which may lead to greater risk of loss of life.

Therefore, a method of delaying ignition and preventing chain ignition when a battery module catches fire is required.

### [DETAILED DESCRIPTION OF INVENTION]

### [TECHNICAL PROBLEMS]

An object of the present disclosure is to provide a battery module for delaying thermal propagation.

### [TECHNICAL SOLUTION]

A battery module according to an embodiment of the present disclosure may include a plurality of battery cells, a module case including a top plate disposed on an upper side of the plurality of battery cells and accommodating the plurality of battery cells, and an aerogel layer disposed between the top plate and the plurality of battery cells.

In addition, the aerogel layer may be made of aerogel.

In addition, the aerogel layer may be made of an aerogel pad.

In addition, a lower surface of the aerogel layer may be in contact with a battery cell stack, and an upper surface of the aerogel layer may be in contact with the top plate.

In addition, the top plate may include one or more venting holes.

In addition, a width of the one or more venting holes in a width direction of the battery module may be greater than a length of the one or more venting holes in a longitudinal direction of the battery module.

In addition, the one or more venting holes may be disposed in a width direction of the battery module.

In addition, the battery module may further include an upper aerogel layer disposed on an upper side of the top plate.

In addition, the battery module may further include a refractory sheet disposed on an upper side of the top plate.

In addition, the refractory sheet may include mica.

In addition, the refractory sheet may include one or more venting holes.

In addition, the top plate may include one or more venting holes, and the one or more venting holes of the top plate and the one or more venting holes of the refractory sheet may overlap on a plane.

In addition, a width of the one or more venting holes of the refractory sheet in a width direction of the battery module may be greater than a length of the one or more venting holes of the refractory sheet in a longitudinal direction of the battery module.

In addition, the one or more venting holes of the refractory sheet may be disposed in a width direction of the battery module.

In addition, the battery module may further include an upper aerogel layer disposed between the top plate and the refractory sheet.

In addition, the upper aerogel layer may be made of an aerogel pad.

In addition, the plurality of battery cells may form a battery cell stack and the battery cell stack may be accommodated in the module case.

### [EFFECT OF INVENTION]

A battery module according to an embodiment of the present disclosure has an effect of delaying thermal propagation. In addition, the battery module has an effect of preventing back flame from spreading to a cell from the inside of the battery module.

### [BRIEF DESCRIPTION OF THE DRAWING]

FIG. 1 is a perspective view of a battery module according to an embodiment of the present disclosure.
FIG. 2 is an exploded perspective view of the battery module according to an embodiment of the present disclosure.
FIG. 3 is a perspective view of a battery cell according to an embodiment of the present disclosure.
FIG. 4 is a perspective view of a terminal busbar according to an embodiment of the present disclosure.
FIG. 5 is a perspective view of an insulating cover and an end plate according to an embodiment of the present disclosure.
FIG. 6 is an exploded perspective view of a portion of an upper part of the battery module according to an embodiment of the present disclosure.
FIG. 7 is a cross-sectional view taken along line A-A' in FIG. 1.
FIG. 8 is a detailed view of part B in FIG. 7.
FIG. 9 is a diagram illustrating a battery pack according to an embodiment of the present disclosure.
FIG. 10 is a perspective view of a vehicle equipped with the battery pack according to an embodiment of the present disclosure.

### [MODE FOR CARRYING OUT THE INVENTION]

The advantages and features of the present disclosure, and the methods for achieving the same will become clear with reference to the embodiments described below in conjunction with the accompanying drawings. However, the present disclosure is not limited to the embodiments disclosed below, but may rather be implemented in various different forms, and these embodiments are provided only to make the present disclosure complete and to fully inform those skilled in the art of the scope of the disclosure, and the present disclosure is defined only by the scope of the claims. Accordingly, in some embodiments, well-known process steps, well-known device structures, and well-known techniques are not specifically described in order to avoid ambiguity in the interpretation of the present disclosure. Like reference numerals refer to like elements throughout the specification.

In the drawings, the thickness may be enlarged to clearly express various layers and regions. Like reference numerals are used for similar parts throughout the specification. When a part, such as a layer, a film, a region, or a plate, is said to be "on" another part, this includes not only cases where it is "directly on" the other part, but also cases where there is another part in between. Conversely, when a part is said to be "directly on" another part, it means that there is no other part in between. Further, when a part, such as a layer, a film, a region, or a plate, is said to be "beneath" another part, this includes not only cases where it is "directly beneath" the other part, but also cases where there are other parts in between. Conversely, when a part is said to be "directly beneath" another part, it means that there are no other parts in between.

A battery module 1000 according to an embodiment of the present disclosure will be described in detail with reference to the drawings.

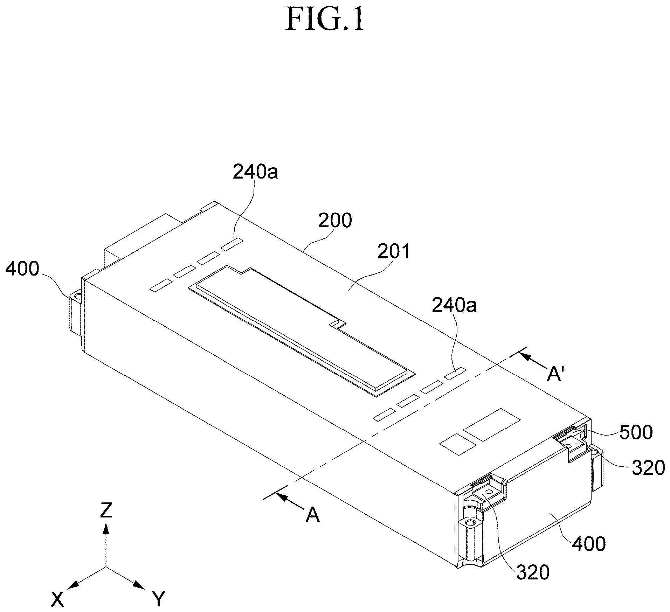

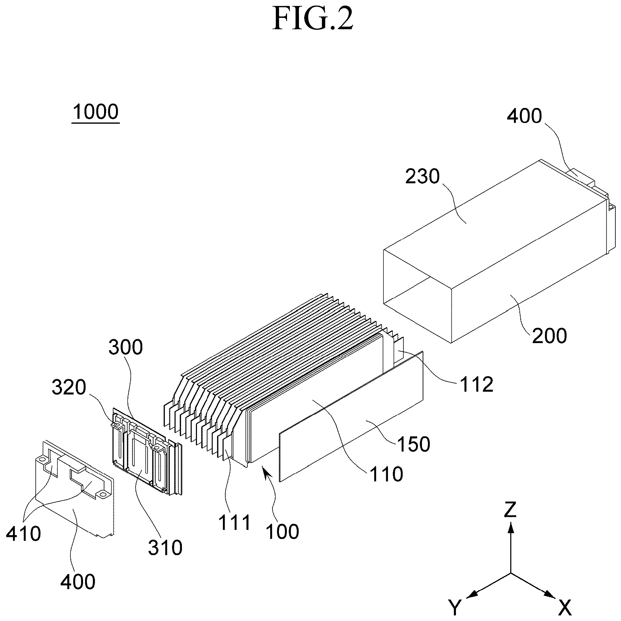

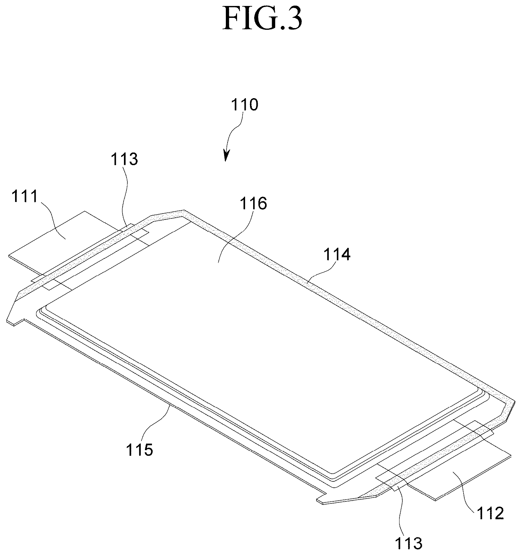

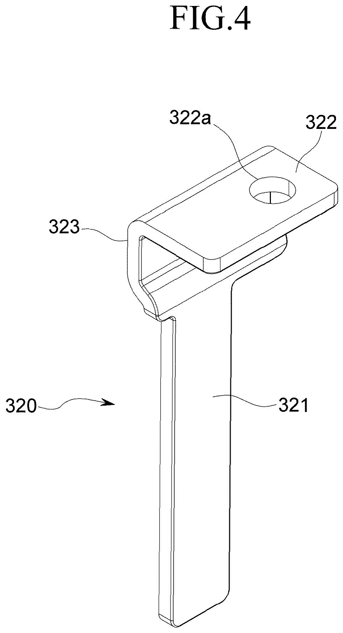

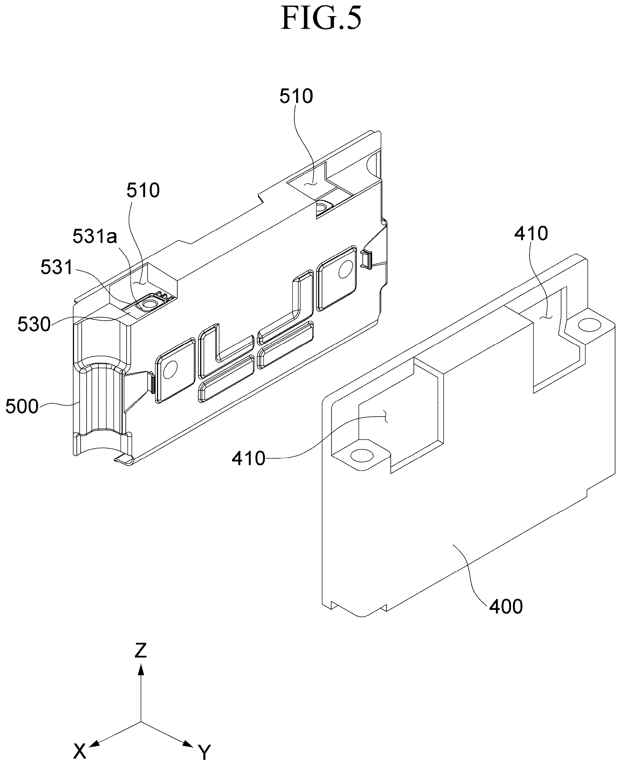

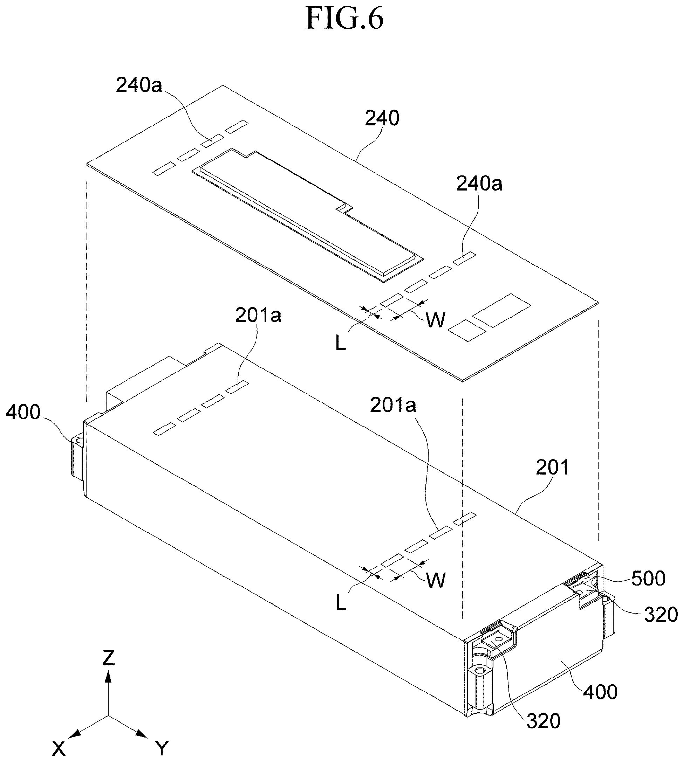

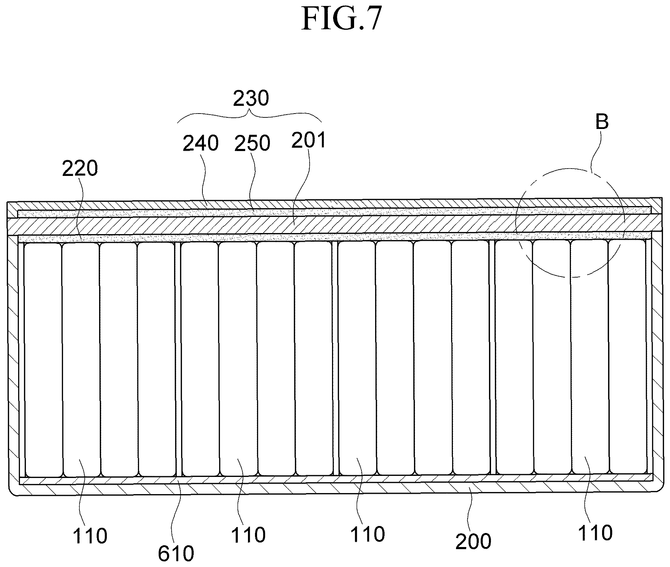

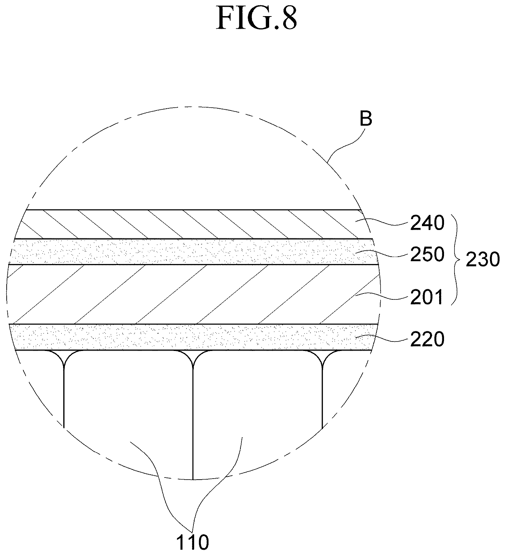

FIG. 1 is a perspective view of a battery module according to an embodiment of the present disclosure, FIG. 2 is an exploded perspective view of the battery module according to an embodiment of the present disclosure, FIG. 3 is a perspective view of a battery cell according to an embodiment of the present disclosure, FIG. 4 is a perspective view of a terminal busbar according to an embodiment of the present disclosure, FIG. 5 is a perspective view of an insulating cover and an end plate according to an embodiment of the present disclosure, FIG. 6 is an exploded perspective view of a portion of an upper part of the battery module according to an embodiment of the present disclosure, FIG. 7 is a cross-sectional view taken along line A-A' in FIG. 1, and FIG. 8 is a detailed view of part B in FIG. 7.

The battery module 1000 according to an embodiment of the present disclosure may include a battery cell stack 100 in which a plurality of battery cells 110 is stacked, a module case 200 that accommodates the battery cell stack 100, a busbar frame 300 positioned on one side and/or the other side of the battery cell stack 100, an insulating cover 500 positioned on the outside of the busbar frame 300, and an end plate 400 positioned on the outside of the insulating cover 500.

The battery cell stack 100 may be formed by stacking a plurality of battery cells 110 in one direction, and the plurality of battery cells 110 may be electrically connected. The direction in which the plurality of battery cells 110 is stacked may be the X-axis direction (or -X-axis direction) in FIG. 2.

The direction from the front to the rear of the battery cell stack 100 or the opposite direction may be defined as a longitudinal direction of the battery cell stack 100, and may be the Y-axis direction in the drawing. In addition, the direction from the top surface to the bottom surface of the battery cell stack 100 or the opposite direction may be defined as a width direction of the battery cell stack 100, and may be the Z-axis direction in the drawing.

The longitudinal direction of the battery cell stack 100 may be substantially the same as the longitudinal direction of the battery cells 110. Electrode leads 111 and 112 of the battery cells 110 may be positioned on the front and rear sides of the battery cell stack 100, and busbars 310 and 320 of the battery module 1000 may be disposed close to the front and rear sides of the battery cell stack 100 to be easily electrically connected with the electrode leads 111 and 112.

The battery cell 110 may be provided as a pouch-type battery cell, and the number of pouch-type battery cells stacked per unit area may be maximized. However, the battery cell 110 does not necessarily have to be provided as a pouch-type battery cell, and may be provided in a square, cylindrical, or other various shapes.

The battery cell 110 provided as a pouch-type battery cell may include an electrode assembly and a cell case 115 that accommodates the electrode assembly (refer to FIG. 3).

The cell case 115 of the battery cell 110 may be a pouch-type cell case 115 for accommodating the electrode assembly. The cell case 115 may include a lower case and an upper case that covers the lower case, and the upper and lower cases may be formed integrally. In addition, as illustrated in FIG. 3, the connecting portion of the upper and lower cases may be bent and folded. In addition, as illustrated, the upper case may completely cover the lower case, and a sealing portion 114 may be formed at the edge thereof.

The upper and lower cases may both be formed in a laminate structure including an inner covering layer, a metal layer, and an outer covering layer. The inner covering layer is located inside the cell case 115 based on the metal layer, and the inner covering layer is required to have insulation and electrolytic resistance since it is in direct contact with the electrode assembly 120 and is required to have excellent thermal bonding strength in the sealing area where the inner layers are thermally bonded in order to seal the cell case. The metal layer is located between the inner covering layer and the outer covering layer and serves as a barrier layer that prevents moisture or various gases from penetrating into the battery from the outside, and an aluminum (Al) thin film which is lightweight and has excellent formability may be used as a material of the metal layer in contact with the inner covering layer. The outer covering layer is located on the outside of the cell case 115 based on the metal layer, and a heat-resistant polymer with excellent tensile strength, moisture permeability, and air permeability may be used for the outer covering layer to protect the electrode assembly and ensuring heat resistance and chemical resistance. For example, nylon or polyethylene terephthalate can be used.

A receiving recess 116 may be formed in each of the upper and lower cases, and the electrode assembly may be accommodated in the receiving recess 116 of the upper and lower cases.

The electrode assembly housed in the cell case 115 may be one of a group consisting of a jelly-roll type electrode assembly having a structure in which a separator is interposed between long sheet-shaped positive and negative electrodes and then rolled up, a stack type electrode assembly composed of unit cells having a structure in which rectangular positive and negative electrodes are laminated with a separator interposed therebetween, a stack-folding type electrode assembly in which unit cells are rolled up by a long separator film, and a lamination-stack type electrode assembly in which unit cells are laminated with a separator interposed therebetween and attached to each other.

In addition, the electrode assembly may include two electrode tabs and two electrode leads 111 and 112 respectively connected to the electrode tabs. The two electrode leads 111 and 112 may be connected to the electrode tabs through welded portions.

One of the two electrode leads 111 and 112 may be a positive lead connected to a positive tab, and the other electrode lead may be a negative lead connected to a negative tab.

A lead film 113 may be attached to each of the electrode leads 111 and 112. The lead film 113 attached to the electrode leads 111 and 112 is positioned between the electrode leads 111 and 112 and the cell case 115 to prevent a short circuit from occurring between the electrode leads 111 and 112 and the cell case 115 and to improve sealing force, thereby preventing leakage of the electrolyte, etc.

The two electrode leads 111 and 112 are illustrated as being respectively disposed on both sides of the electrode assembly, but may be disposed on only one side of the electrode assembly depending on positioning of the electrode tabs.

The module case 200 may be for protecting the battery cell stack 100 and electrical components connected thereto from external physical impact, and the module case 200 may accommodate the battery cell stack 100 and the electrical components connected thereto in the internal space of the module case 200.

The module case 200 may have various structures, and for example, the module case 200 may have a mono-frame structure. Here, the mono-frame may take the form of a metal plate in which the upper surface, lower surface, and both side surfaces are integrated. The mono-frame may be manufactured by extrusion molding. As another example, the module case 200 may have a structure in which a U-shaped frame and a top plate 201 are combined. In the case of a structure in which a U-shaped frame and a top plate 201 are combined, the structure of the module case 200 may be formed by combining the top plate 201 with the upper side of the U-shaped frame, which is a metal plate in which a lower plate and both side surfaces are combined or integrated, and each frame or plate may be manufactured by press molding. In addition, the structure of the module case 200 may be an L-shaped frame structure in addition to a mono-frame or a U-shaped frame 210, and various structures not described in the above-described examples may be provided as the structure of the module case 200.

The structure of the module case 200 may be provided in an open form in the longitudinal direction of the battery cell stack 100. The front and rear of the battery cell stack 100 may not be covered by the module case 200. The electrode leads 111 and 112 of the battery cell 110 may not be covered by the module case 200. The front and rear of the battery cell stack 100 may be covered by the busbar frame 300, the end plate 400, or the busbars 310 and 320 which will be described later, and accordingly, the front and rear of the battery cell stack 100 may be protected from external physical impact, etc.

A compression pad 150 may be located between the battery cell stack 100 and one side of the inner surface of the module case 200.

The compression pad 150 may be disposed to face the battery cell 110 positioned at the outermost side of the battery cell stack 100 in the X-axis direction in the drawing in the battery cell stack 100.

In addition, a thermally conductive resin may be injected between the battery cell stack 100 and the inner surface of the module case 200, and a thermally conductive resin layer 610 may be formed between the battery cell stack 100 and one of the inner surfaces of the module case 200 by the injected thermally conductive resin. Here, the thermally conductive resin layer 610 may be positioned on the Z-axis of the battery cell stack 100, and may be formed between the battery cell stack 100 and a lower plate of the module case 200 positioned on the -Z-axis.

The busbar frame 300 is positioned on one side of the battery cell stack 100, and may cover one side of the battery cell stack 100 and guide connection between the battery cell stack 100 and an external device. Specifically, the busbar frame 300 may be positioned on the front or rear side of the battery cell stack 100 as illustrated, or may also be positioned on the upper side, lower side, or side. At least one of the busbars 310 and 320 and a module connector may be mounted on the busbar frame 300. As illustrated in FIG. 2, one side of the busbar frame 300 may be connected to one side or the other side of the battery cell stack 100, and the other side of the busbar frame 300 may be connected to the busbars 310 and 320.

The busbar frame 300 may include an electrically insulating material. The busbar frame 300 can limit the busbars 310 and 320 from contacting other parts of the battery cells 110 other than parts where the busbars are connected to the electrode leads 111 and 112, and can prevent electrical short circuits from occurring.

The busbar frame 300 may be positioned on one side and the other side of the battery cell stack 100.

The busbars 310 and 320 may be mounted on one side of the busbar frame 300 and can be used to electrically connect the battery cell stack 100 or the battery cells 110 to an external device circuit. A plurality of busbars 310 and 320 may be provided, and may be positioned between the battery cell stack 100 or the busbar frame 300 and the end plate 400, thereby being protected from external impacts, and minimizing deterioration of durability due to external moisture, etc.

The busbars 310 and 320 may be electrically connected to the battery cell stack 100 through the electrode leads 111 and 112 of the battery cells 110.

Specifically, the electrode leads 111 and 112 of the battery cells 110 may be bent after passing through lead slits formed in the busbar frame 300 and connected to the busbars 310 and 320. The battery cells 110 constituting the battery cell stack 100 can be connected in series or in parallel by the busbars 310 and 320.

The busbars 310 and 320 may include a terminal busbar 320 for electrically connecting one battery module 100 to another battery module 100. At least a portion of the terminal busbar 320 may be exposed to the outside of the end plate 400 to be connected to another battery module 100, and the end plate 400 may have a terminal opening 410 for this purpose.

One end (second portion 322) of the terminal busbar 320 may be exposed through an opening 510 of the insulating cover 500 and the terminal opening 410 of the end plate 400.

As illustrated in FIG. 4, the terminal busbar 320 may include a first portion 321 connected to the electrode leads 111 and 112 of the battery cell 110 and the second portion 322 exposed to the outside through the terminal opening 410. In addition, the terminal busbar 320 may further include a bent portion 323 formed between the first portion 321 and the second portion 322.

In the terminal busbar 320, the first portion 321 may be connected to the second portion 322 through the bent portion 323, and one side of the first portion 321 and one side of the second portion 322 may be perpendicular to each other. That is, by forming the bent portion 323 in the terminal busbar 320, the second portion 322 protrudes and is mounted on a mounting portion 530 of the insulating cover 500, and the second portion 322 can be electrically connected to an inter-busbar. A joining hole 322a is formed in the second portion 322 forming one end of the terminal busbar 320, and the second portion 322 of the terminal busbar 320 is fixed by a fixing pin inserted into the joining hole 322a.

The end plate 400 may serve to protect the battery cell stack 100 and the electrical components connected thereto from external physical impact by covering an open surface of the module case 200. For this purpose, the end plate 400 may be manufactured using a material having a predetermined strength, and for example, the end plate 400 may be formed of a metal such as aluminum or a plastic material.

The terminal opening 410 may be formed in the end plate 400. The terminal opening 410 may be positioned on each side of the end plate 400, and a portion of the insulation cover 500 and one end (second portion 322) of the terminal busbar 320 may be exposed through the terminal opening 410.

In addition, a connector opening may be positioned between the terminal openings 410 located on both sides of the end plate 400, and a module connector may be exposed to the outside through the connector opening.

The end plate 400 may be combined with the module case 200 while covering the busbar frame 300 or the busbars 310 and 320 located on one side of the battery cell stack 100. Each corner of the end plate 400 may be joined to the corresponding corner of the module case 200 by welding, bolting, hooking, or the like.

The end plate 400 may be positioned on one side and the other side of the module case 200 to cover both sides of the battery cell stack 100. In the present embodiment, an example in which the end plate 400 is positioned on the front and rear sides of the module case 200 is illustrated.

In addition, the insulating cover 500 for electrical insulation may be positioned between the end plate 400 and the busbar frame 300. That is, the busbar frame 300, the insulating cover 500, and the end plate 400 may be sequentially positioned from the battery cell stack 100 to the outside. Like the end plate 400, a plurality of busbar frames 300 and a plurality of insulating covers 500 may be provided.

The insulating cover 500 may include an electrical insulating material and may block the busbars 310 and 320 from contacting the end plate 400.

The insulating cover 500 may include the opening 510 and the mounting portion 530. The opening 510 may be positioned on both sides of the upper part of the insulating cover 500, and one end (the second portion 322) of the terminal busbar 320 may be exposed through the opening 510.

In addition, a connector opening may be positioned between the openings 510 located on both sides of the insulating cover 500, and the module connector may be exposed to the outside through the connector opening.

The insulating cover 500 may be positioned on the inner surface of the end plate 400, and may be in close contact with the inner surface of the end plate 400, but the present disclosure is not limited thereto.

As described above, one end (the second portion 322) of the terminal busbar 320 may be exposed through the opening 510, and the exposed one end (second portion 322) of the terminal busbar 320 may be mounted on the mounting portion 530. Accordingly, the mounting portion 530 may be positioned adjacent to the opening 510 and may be positioned on the upper outer surface.

The second portion 322 of the terminal busbar 320 may be mounted on the upper surface of the mounting portion 530, and thus the upper surface of the mounting portion 530 may form a mounting surface. In addition, as illustrated in FIG. 5, the mounting portion 530 may include a fixing member 531 for fixing the terminal busbar 320.

The fixing member 531 may fix the second portion 322 of the terminal busbar 320 and may include a fixing hole 531a.

A fixing pin may be inserted into the fixing hole 531a. The fixing pin inserted into the joining hole 322a formed in the second portion 322 of the terminal busbar 320 is fixed by being coupled to the fixing hole 531a, thereby fixing the second portion 322 of the terminal busbar 320 to the insulating cover 500.

Accordingly, the second portion 322 of the terminal busbar 320 is mounted on the mounting portion 530 of the insulating cover 500, and the second portion 322 comes into contact with the fixing member 531 disposed on the mounting portion 530.

In addition, a terminal cover covering the exposed one end (second portion 322) of the terminal busbar 320 may be disposed on the insulating cover 500.

Meanwhile, as illustrated in FIGS. 6 to 8, an aerogel layer 220 may be provided between the plurality of battery cells 110 or the battery cell stack 100 and the top plate 201 in the battery module 1000 according to the present embodiment.

The aerogel layer 220 may be made of aerogel. Aerogel may be made by making various raw materials into a gel form and then drying the same specially.

The aerogel may have a high porosity and have excellent insulation performance due to low thermal conductivity.

Therefore, when the aerogel layer 220 is provided between the battery cell stack 100 and the top plate 201, flames may be prevented from spreading to adjacent battery cells 110 when some battery cells 110 are ignited, and thermal propagation can be delayed.

The aerogel layer 220 may take the form of an aerogel pad, or other forms.

In the present embodiment, the lower surface of the aerogel layer 220 may contact the upper surface of the battery cell 110 or the battery cell stack 100. In addition, the upper surface of the aerogel layer 220 may contact the lower surface of the top plate 201. Gases generated due to ignition of the battery cell 110, and the like may be discharged through a venting hole 201a of the aerogel layer 220 and the top plate 201.

In the present embodiment, a top plate assembly 230 may be disposed on the module case 200, and the top plate assembly 230 may include the top plate 201 and a refractory sheet 240 disposed on the upper side of the top plate 201.

The venting hole 201a may be formed in the top plate 201 as illustrated in FIG. 6. When some of the battery cells 110 are ignited, gas and flame can be released through the venting hole 201a, and swelling of the module can be compensated. In the present embodiment, the venting hole 201a may be disposed in a portion of the top plate 201 rather than the entire area of the top plate 201.

As illustrated, a plurality of venting holes 201a may be formed in the top plate 201. The width W of each venting hole 201a in the width direction (X-axis direction) of the battery module 1000 may be greater than the length L thereof in the longitudinal direction (Y-axis direction) of the battery module 1000, and the width W of the venting hole 201a may be at least twice the length L thereof. The length L of the venting hole 201a may be, for example, about 1 mm to 30 mm. The area ratio of the venting holes 201a (the ratio of the area occupied by all venting holes 201a to the total area of the top plate 201) may be less than 5% or 1% to 5%, and may be about 3%.

The venting holes 201a may be formed in multiple rows in the longitudinal direction (Y-axis direction) of the battery module 1000, and may be formed in two rows as illustrated in the present embodiment, and four venting holes 201a may be disposed in one row.

By disposing the venting holes 201a in a restricted area of the top plate 201 in this manner, it is possible to prevent back flame from affecting adjacent battery cells 110.

The refractory sheet 240 may be disposed on the upper side of the top plate 201, and the area of the refractory sheet 240 may be the same as or similar to that of the top plate 201.

The refractory sheet 240 may be formed of mica or other refractory materials, or may include mica or other refractory materials.

By providing the refractory sheet 240 on the upper side of the top plate 201 in this manner, the fire resistance of the top plate assembly 230 can be improved, the top plate 201 can be protected from back flame coming from the outside to the inside of the battery module 1000, and the upper structure can be prevented from collapsing.

In addition, a venting hole 240a may be formed in the refractory sheet 240.

The venting hole 240a of the refractory sheet 240 may be disposed in the same manner as the venting hole 201a of the top plate 201. That is, the venting hole 240a may be disposed in a portion of the refractory sheet 240 rather than the entire area thereof, and a plurality of venting holes 240a may be disposed.

The width W of each venting hole 240a in the width direction (X-axis direction) of the battery module 1000 may be greater than the length L thereof in the longitudinal direction (Y-axis direction) of the battery module 1000, and the width W of the venting hole 240a may be at least twice the length L thereof. The length L of the venting hole 240a may be about 1 mm to 30 mm. The ratio of the area occupied by all venting holes 240a to the area of the refractory sheet 240 may be less than 5% or 1% to 5%, and may be about 3%. Alternatively, the ratio of the area occupied by all the venting holes 240a of the refractory sheet 240 to the total area of the top plate 201 may be less than 5% or 1% to 5%, and may be about 3%.

The venting holes 240a may be formed in multiple rows in the longitudinal direction (Y-axis direction) of the battery module 1000, and may be formed in two rows as illustrated in the present embodiment, and four venting holes 240a may be disposed in one row.

The venting holes 240a of the refractory sheet 240 may be disposed to correspond to or overlap the venting holes 201a of the top plate 201 on a plane.

Through the venting holes 240a of the refractory sheet 240, gas and flame may be released to the outside of the module when some of the battery cells 110 are ignited, and swelling of the module may be complemented.

The top plate assembly 230 may further include an upper aerogel layer 250 between the top plate 201 and the refractory sheet 240.

The upper aerogel layer 250 may be made of aerogel, and may have composition identical to that of the aerogel layer 220.

The aerogel constituting the upper aerogel layer 250 has been described with respect to the aerogel layer 220, and thus detailed description thereof is omitted here. In the present embodiment, the upper aerogel layer 250 is disposed between the top plate 201 and the refractory sheet 240, thereby delaying thermal propagation, improving the refractory property of the top plate assembly 230, and preventing flames from outside the module.

The upper aerogel layer 220 may take the form of an aerogel pad similar to the aerogel layer 220, or may take other forms.

In the present embodiment, the lower surface of the upper aerogel layer 250 may contact the top plate 201. In addition, the upper surface of the upper aerogel layer 250 may contact the lower surface of the refractory sheet 240. Gas generated due to ignition of the battery cell 110 can be discharged through the venting holes 240a of the upper aerogel layer 250 and the refractory sheet 240. The thickness of the upper aerogel layer 250 may be, for example, one to two times that of the refractory sheet 240, but is not limited thereto.

In the present embodiment, the thermally conductive resin layer (610) can be arranged on the lower side of the battery cell stack (100) within the module case (200).

A thermally conductive resin layer 610 may be formed by applying or injecting a thermally conductive resin onto the upper surface of a bottom plate of the module case (the upper surface of the bottom plate facing the inside of the module 1000). The thermally conductive resin layer 610 disposed between the battery cell stack 100 and the bottom plate of the module case 200 may serve to transfer the heat of the battery cell stack 100 to the bottom plate of the module case 200 to cool the battery cell stack 100. In addition, a heat sink may be provided at the bottom of the module case 200, and the heat sink may cool the battery cell stack 100 through the thermally conductive resin layer 610.

In addition, the thermally conductive resin layer 610 is disposed on the bottom plate 202 of the module case 200, but may also be disposed on the bottom plate 202 and the side 203 of the module case 200.

In the present embodiment, the thermally conductive resin may have adhesiveness and thermal plasticity, and various thermally conductive adhesives may be used as the thermally conductive resin. For example, various organic and/or inorganic thermally conductive adhesives such as a thermally conductive epoxy adhesive, a thermally conductive silicone adhesive, and a thermally conductive urethane adhesive may be used for the battery module 1000 according to an embodiment of the present disclosure.

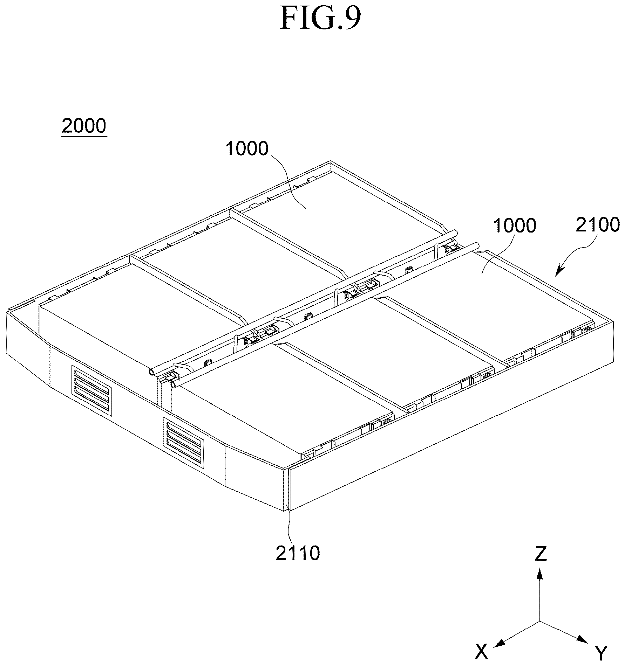

As described above, one or more battery modules 1000 according to the present disclosure may form a battery pack 2000. As illustrated in FIG. 9, the battery pack 2000 according to an embodiment of the present disclosure may accommodate at least one battery module 1000 inside a pack case 2100, and may include various control and protection systems such as a battery management system (BMS) and a cooling system.

The pack case 2100 may include a lower housing 2110 and an upper housing coupled to the upper side of the lower housing 2110, and a plurality of battery modules 1000 may be accommodated in the internal space of the lower housing 2110 and the upper housing.

Meanwhile, in the embodiment of the present disclosure, an example in which a plurality of battery modules 1000 is accommodated inside the battery pack 2000 is illustrated, but a plurality of battery cells 110 may be directly disposed inside the battery pack 2000.

The battery module 1000 and the battery pack 2000 according to the present disclosure configured as described above may be applied to various devices. Specifically, they may be applied to means of transportation such as electric bicycles, electric vehicles, and hybrid vehicles, or an energy storage system (ESS), but the present disclosure is not limited thereto and the battery module 1000 and the battery pack 2000 may be applied to various devices that can use secondary batteries.

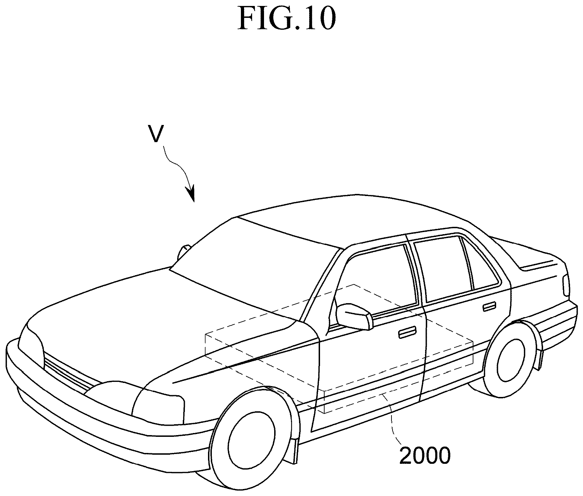

FIG. 10 is a diagram illustrating an electric vehicle V equipped with the battery pack 2000. In the electric vehicle V, the wheels are driven by a motor that receives power from the battery pack 2000 to drive the electric vehicle.

The present disclosure has been described with reference to embodiments as described above, but is not limited to the above embodiments, and various changes and modifications may be made by those skilled in the art within the scope that does not depart from the spirit of the present disclosure.

### [INDUSTRIAL APPLICABILITY]

The present disclosure can provide a battery module capable of delaying thermal propagation.

## Claims

1. A battery module comprising:
a plurality of battery cells;
a module case including a top plate disposed on an upper side of the plurality of battery cells, and accommodating the plurality of battery cells; and
an aerogel layer disposed between the top plate and the plurality of battery cells.

2. The battery module of claim 1, wherein the aerogel layer is made of aerogel.

3. The battery module of claim 1, wherein the aerogel layer is made of an aerogel pad.

4. The battery module of claim 1, wherein a lower surface of the aerogel layer is in contact with a battery cell stack, and an upper surface of the aerogel layer is in contact with the top plate.

5. The battery module of claim 1, wherein the top plate includes one or more venting holes.

6. The battery module of claim 5, wherein a width of the one or more venting holes in a width direction of the battery module is greater than a length of the one or more venting holes in a longitudinal direction of the battery module.

7. The battery module of claim 5, wherein the one or more venting holes are disposed in a width direction of the battery module.

8. The battery module of claim 1, further comprising an upper aerogel layer disposed on an upper side of the top plate.

9. The battery module of claim 1, further comprising a refractory sheet disposed on an upper side of the top plate.

10. The battery module of claim 9, wherein the refractory sheet includes mica.

11. The battery module of claim 9, wherein the refractory sheet includes one or more venting holes.

12. The battery module of claim 11, wherein the top plate includes one or more venting holes, and the one or more venting holes of the top plate and the one or more venting holes of the refractory sheet overlap on a plane.

13. The battery module of claim 11, wherein a width of the one or more venting holes of the refractory sheet in a width direction of the battery module is greater than a length of the one or more venting holes of the refractory sheet in a longitudinal direction of the battery module.

14. The battery module of claim 11, wherein the one or more venting holes of the refractory sheet is disposed in a width direction of the battery module.

15. The battery module of claim 9, further comprising an upper aerogel layer disposed between the top plate and the refractory sheet.

16. The battery module of claim 15, wherein the upper aerogel layer is made of an aerogel pad.

17. The battery module of claim 1, wherein the plurality of the battery cells forms a battery cell stack and the battery cell stack is accommodated in the module case.
